# EUROPEAN PATENT APPLICATION

(11) **EP 4 563 434 A1**
(43) Date of publication of application: **04.06.2025**
(21) Application number: 23851376.6
(22) Date of filing: 15.06.2023
(51) Int. Cl.: B60W 50/14, B60R 1/22

(54) **DISPLAY METHOD, AND CONTROL APPARATUS AND VEHICLE**

(30) Priority: 11.08.2022 CN 202210962537
(71) Applicant: Shenzhen Yinwang Intelligent Technologies Co., Ltd., Shenzhen, Guangdong 518129 (CN)
(72) Inventor: WANG, Junxia, Shenzhen, Guangdong 518129 (CN); HU, Wenxiao, Shenzhen, Guangdong 518129 (CN)
(74) Representative: Maiwald GmbH
(86) International application number: PCT/CN2023/100502
(87) International publication number: WO 2024/032149

(57) **Abstract**

Embodiments of this application provide a display method, a control apparatus, and a vehicle. The method includes: obtaining an auto lane change task, where the auto lane change task is used to indicate a vehicle to automatically change from a first lane to a second lane; and before the auto lane change task is executed, displaying, in a first display area, a blind spot image of the second lane, where the blind spot image of the second lane is obtained by a camera apparatus outside a cockpit of the vehicle. Embodiments of this application may be applied to an intelligent vehicle or an electric vehicle, to help improve driving experience of a user in an auto lane change process.

## Description

This application claims priority to Chinese Patent Application No. 202210962537.0, filed with the China National Intellectual Property Administration on August 11, 2022 and entitled "DISPLAY METHOD, CONTROL APPARATUS, AND VEHICLE", which is incorporated herein by reference in its entirety.

### TECHNICAL FIELD

Embodiments of this application relate to the field of intelligent driving, and more specifically, to a display method, a control apparatus, and a vehicle.

### BACKGROUND

In an auto lane change process of a current vehicle, a virtual scene can be displayed on a display in a cockpit of the vehicle, to prompt an auto lane change intention of the vehicle and information about an ambient environment. Because a field of view of the virtual scene is limited and display of another vehicle or the environment may be unstable, anxiety of a driver may be caused, resulting in poor user experience.

### SUMMARY

Embodiments of this application provide a display method, a control apparatus, and a vehicle, to help improve driving experience of a user in an auto lane change process.

A mobile carrier in this application may include a land transportation means, a water transportation means, an air transportation means, an industrial device, an agricultural device, an entertainment device, or the like. For example, the mobile carrier may be a vehicle, and the vehicle is a vehicle in a broad sense, and may be a transportation means (for example, a commercial vehicle, a passenger vehicle, a motorcycle, a flying car, or a train), an industrial vehicle (for example, a forklift, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For another example, the mobile carrier may be a transportation means like an aircraft or a ship.

According to a first aspect, a display method is provided, and the method includes: obtaining an auto lane change task, where the auto lane change task is used to indicate a vehicle to automatically change from a first lane to a second lane; and before the auto lane change task is executed, displaying, in a first display area, a blind spot image of the second lane, where the blind spot image of the second lane is obtained by a camera apparatus outside a cockpit of the vehicle.

In embodiments of this application, the vehicle can display the blind spot image in the first display area before the auto lane change task is executed. This helps avoid back-and-forth switching of a line of sight of a driver between a vehicle display and a rearview mirror, and helps avoid anxiety generated when the driver confirms an execution status of the auto lane change task and a blind spot image of a target lane, thereby helping improve driving experience of the user.

Display of the blind spot image of the second lane also helps avoid back-and-forth switching of a line of sight of the user between a driving direction of the vehicle and the rearview mirror, and further reduces anxiety of the driver in an auto lane change process.

With reference to the first aspect, in some implementations of the first aspect, the obtaining an auto lane change task includes: when the vehicle is in an auto lane change state, generating the auto lane change task and prompting a user to confirm the auto lane change task. The displaying, in a first display area, a blind spot image of the second lane includes: displaying, in the first display area, the blind spot image of the second lane when an operation of confirming the auto lane change task by the user is detected.

In embodiments of this application, when planning the auto lane change task, the vehicle can prompt the user to confirm the auto lane change task. When the operation of confirming the auto lane change task by the user is detected, the blind spot image of the second lane can be displayed. This helps avoid back-and-forth switching of a line of sight of the driver between the vehicle display and the rearview mirror, and helps avoid anxiety generated when the driver confirms the execution status of the auto lane change task and the blind spot image of the target lane, thereby helping improve driving experience of the user.

In some possible implementations, that the vehicle is in the auto lane change state includes: The vehicle detects that the user enables an auto lane change assistance function. For example, the auto lane change assistance function includes but is not limited to a navigation cruise assistant (navigation cruise assistant, NCA) function or an integrated cruise assistant (integrated cruise assistant, ICA) function.

With reference to the first aspect, in some implementations of the first aspect, the obtaining an auto lane change task includes: generating the auto lane change task when the vehicle is not in an auto lane change state and a preset operation of a user is detected. The displaying, in a first display area, a blind spot image of the second lane includes: displaying, in the first display area, the blind spot image of the second lane when the preset operation is detected.

In embodiments of this application, the auto lane change task can be generated when the vehicle is not in the auto lane change state and the preset operation of the user is detected. When the auto lane change task is generated, the blind spot image of the second lane can be displayed. This helps avoid back-and-forth switching of a line of sight of the driver between the vehicle display and the rearview mirror, and helps avoid anxiety generated when the driver confirms the execution status of the auto lane change task and the blind spot image of the target lane, thereby helping improve driving experience of the user.

With reference to the first aspect, in some implementations of the first aspect, the obtaining an auto lane change task includes: generating the auto lane change task when the vehicle is in an auto lane change state. The displaying, in a first display area, a blind spot image of the second lane includes: displaying, in the first display area, the blind spot image of the second lane when the auto lane change task is generated.

In embodiments of this application, the vehicle can display the blind spot image of the second lane when the auto lane change task is generated and the user does not need to confirm the auto lane change task. This helps avoid back-and-forth switching of a line of sight of the driver between the vehicle display and the rearview mirror, and helps avoid anxiety generated when the driver confirms the execution status of the auto lane change task and the blind spot image of the target lane, thereby helping improve driving experience of the user.

With reference to the first aspect, in some implementations of the first aspect, before the displaying, in a first display area, a blind spot image of the second lane, the method further includes: determining the first display area based on a relative location relationship between the first lane and the second lane.

In embodiments of this application, the first display area is determined based on a relative location relationship between a current lane and the target lane. In this way, a display location of the blind spot image is more in line with a habit of the driver. This helps improve driving experience of the user.

In some possible implementations, the first display area is a display area on an instrument display screen. For example, when the vehicle automatically changes to a left lane, the blind spot image of the second lane may be displayed in a left area of the instrument display screen. For another example, when the vehicle automatically changes to a right lane, the blind spot image of the second lane may be displayed in a right area of the instrument display screen.

With reference to the first aspect, in some implementations of the first aspect, the vehicle includes an instrument display screen and a central display screen. The method further includes: displaying a virtual scene in a second display area, where the virtual scene includes the vehicle and information about an environment around the vehicle. The first display area and the second display area are display areas on the instrument display screen; or the first display area is a display area on the central display screen, and the second display area is a display area on the instrument display screen.

In embodiments of this application, the blind spot image can compensate for a short observation distance and a small observation range for a blind spot at a rear side of the vehicle in the virtual scene, and can also compensate for a disadvantage of inaccurate detection or unstable display of the virtual scene, so as to help improve vehicle safety in the auto lane change process.

With reference to the first aspect, in some implementations of the first aspect, the method further includes: displaying prompt information in the first display area in a process of executing the auto lane change task, where the prompt information indicates a traffic safety status of the second lane.

In embodiments of this application, in the process of executing the auto lane change task, the prompt information indicating the traffic safety status of the second lane may be further displayed in the first display area, so that the user can timely determine, based on the prompt information, whether the second lane is safe. In addition, the driver can determine, based on the prompt information and the execution status of the auto lane change task, whether the current vehicle is performing a safe lane change. This helps improve driving experience of the user.

In some possible implementations, the traffic safety status of the second lane includes information indicating that the second lane is safe, that there is an oncoming vehicle in the second lane, that the second lane is dangerous, or that there is a solid line between the first lane and the second lane.

With reference to the first aspect, in some implementations of the first aspect, the method further includes: hiding the blind spot image when the auto lane change task is completed.

In embodiments of this application, the vehicle can hide the blind spot image after completing the auto lane change task. This can avoid interference of the blind spot image to the user, improve driving experience of the user, and avoid waste of vehicle power consumption.

According to a second aspect, a control apparatus is provided. The control apparatus includes: an obtaining unit, configured to obtain an auto lane change task, where the auto lane change task is used to indicate a vehicle to automatically change from a first lane to a second lane; and a control unit, configured to: before the auto lane change task is executed, control a blind spot image of the second lane to be displayed in a first display area, where the blind spot image of the second lane is obtained by a camera apparatus outside a cockpit of the vehicle.

With reference to the second aspect, in some implementations of the second aspect, the apparatus further includes a detection unit. The obtaining unit is configured to: when the vehicle is in an auto lane change state, generate the auto lane change task and prompt a user to confirm the auto lane change task. The control unit is configured to: when the detection unit detects an operation of confirming the auto lane change task by the user, control the blind spot image of the second lane to be displayed in the first display area.

With reference to the second aspect, in some implementations of the second aspect, the apparatus further includes a detection unit. The obtaining unit is configured to generate the auto lane change task when the vehicle is not in an auto lane change state and a preset operation of a user is detected. The control unit is configured to: when the detection unit detects the preset operation, control the blind spot image of the second lane to be displayed in the first display area.

With reference to the second aspect, in some implementations of the second aspect, the obtaining unit is configured to generate the auto lane change task when the vehicle is in an auto lane change state. The control unit is configured to: when the obtaining unit generates the auto lane change task, control the blind spot image of the second lane to be displayed in the first display area.

With reference to the second aspect, in some implementations of the second aspect, the apparatus further includes a determining unit. The determining unit is configured to: before the control unit controls the blind spot image of the second lane to be displayed in the first display area, determine the first display area based on a relative location relationship between the first lane and the second lane.

With reference to the second aspect, in some implementations of the second aspect, the vehicle includes an instrument display screen and a central display screen. The control unit is further configured to control a virtual scene to be displayed in a second display area, where the virtual scene includes the vehicle and information about an environment around the vehicle. The first display area and the second display area are display areas on the instrument display screen; or the first display area is a display area on the central display screen, and the second display area is a display area on the instrument display screen.

With reference to the second aspect, in some implementations of the second aspect, the control unit is further configured to: in a process of executing the auto lane change task, control prompt information to be displayed in the first display area, where the prompt information indicates a traffic safety status of the second lane.

With reference to the second aspect, in some implementations of the second aspect, the control unit is further configured to hide the blind spot image when the auto lane change task is completed.

According to a third aspect, a control apparatus is provided, where the apparatus includes at least one processor and an interface circuit, the processor communicates with a display apparatus through the interface circuit, and the at least one processor is configured to perform the method according to any implementation of the first aspect, to control a display interface of the display apparatus.

In some possible implementations, the display apparatus is a vehicle display.

According to a fourth aspect, a control apparatus is provided. The apparatus includes a processing unit and a storage unit. The storage unit is configured to store instructions, and the processing unit executes the instructions stored in the storage unit, to enable the apparatus to perform the method according to any possible implementation of the first aspect.

Optionally, the processing unit may include at least one processor, and the storage unit may be a memory. The memory may be a storage unit (for example, a register or a cache) in a chip, or may be a storage unit (for example, a read-only memory or a random access memory) located outside a chip in a vehicle.

According to a fifth aspect, a display system is provided. The display system includes a computing platform and a display apparatus. The computing platform includes the apparatus according to any one of the second aspect, the third aspect, or the fourth aspect.

In some possible implementations, the display apparatus is a vehicle display.

According to a sixth aspect, a mobile carrier is provided. The mobile carrier includes the apparatus according to any one of the second aspect, the third aspect, or the fourth aspect, or the mobile carrier includes the display system according to the fifth aspect.

With reference to the sixth aspect, in some implementations of the sixth aspect, the mobile carrier is a vehicle.

According to a seventh aspect, a computer program product is provided. The computer program product includes computer program code. When the computer program code is run on a computer, the computer is enabled to perform the method according to any possible implementation of the first aspect.

It should be noted that some or all of the computer program code may be stored in a first storage medium. The first storage medium may be encapsulated with a processor, or may be encapsulated separately from a processor. This is not specifically limited in embodiments of this application.

According to an eighth aspect, a computer-readable medium is provided. The computer-readable medium stores program code. When the computer program code is run on a computer, the computer is enabled to perform the method according to any possible implementation of the first aspect.

According to a ninth aspect, an embodiment of this application provides a chip system. The chip system includes a processor, configured to invoke a computer program or computer instructions stored in a memory, to enable the processor to perform the method according to any possible implementation of the first aspect.

With reference to the ninth aspect, in a possible implementation, the processor is coupled to the memory through an interface.

With reference to the ninth aspect, in a possible implementation, the chip system further includes the memory, and the memory stores the computer program or the computer instructions.

### BRIEF DESCRIPTION OF DRAWINGS

FIG. 1 is a functional block diagram of a vehicle according to an embodiment of this application;
FIG. 2 is a diagram of an example of display distribution in a cockpit of a vehicle according to an embodiment of this application;
FIG. 3(a)-1 to FIG. 3(c)-2 show a group of graphical user interfaces GUIs according to an embodiment of this application;
FIG. 4A and FIG. 4B show another GUI according to an embodiment of this application;
FIG. 5(a)-1 to FIG. 5(c)-2 show another group of GUIs according to an embodiment of this application;
FIG. 6(a)-1 to FIG. 6(b)-2 show another group of GUIs according to an embodiment of this application;
FIG. 7A and FIG. 7B are a flowchart of an auto lane change method according to an embodiment of this application;
FIG. 8 is another flowchart of a display method according to an embodiment of this application; and
FIG. 9 is a block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are merely used to distinguish between different described objects, and do not limit a position, a sequence, a priority, a quantity, or content of the described objects. In embodiments of this application, use of a prefix word for distinguishing between described objects, like an ordinal number, does not constitute a limitation on the described object. For descriptions of the described object, refer to context descriptions in the claims or embodiments, and use of the prefix word should not constitute a redundant limitation. In addition, in descriptions of embodiments, unless otherwise specified, "a plurality of" means two or more.

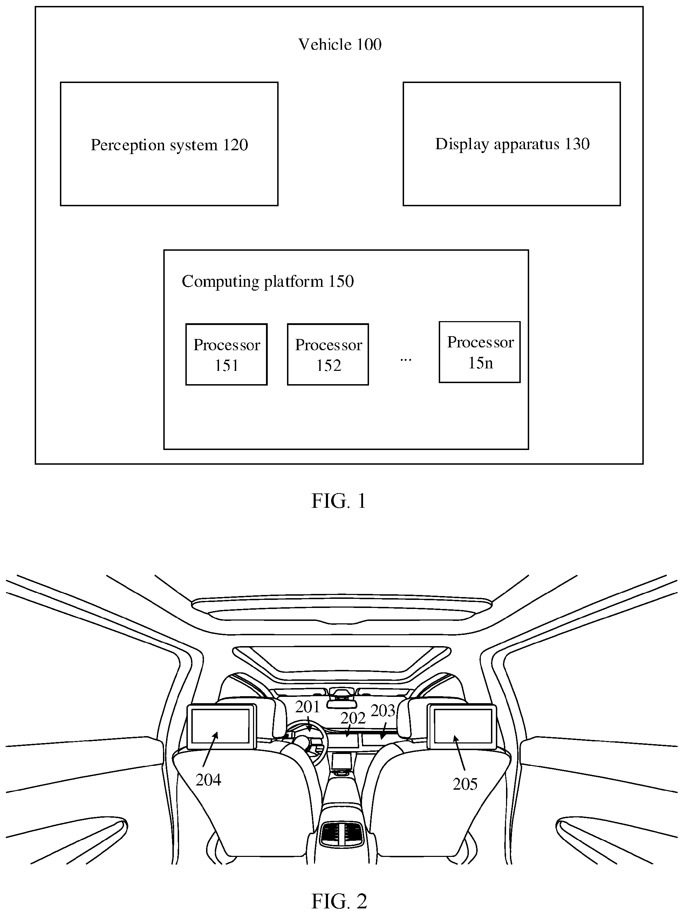

FIG. 1 is a functional block diagram of a vehicle 100 according to an embodiment of this application. The vehicle 100 may include a perception system 120, a display apparatus 130, and a computing platform 150. The perception system 120 may include one or more types of sensors that sense information about an ambient environment of the vehicle 100. For example, the perception system 120 may include one or more of a positioning system, an inertial measurement unit (inertial measurement unit, IMU), a lidar, a millimeter-wave radar, an ultrasonic radar, and a camera apparatus, where the positioning system may be a global positioning system (global positioning system, GPS), a BeiDou system, and another positioning system.

Some or all of functions of the vehicle 100 may be controlled by the computing platform 150. The computing platform 150 may include one or more processors, for example, processors 151 to 15n (where n is a positive integer), and the processor is a circuit that has a signal processing capability. In an implementation, the processor may be a circuit that has instruction reading and running capabilities, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit, and the logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory, and the memory is configured to store instructions. Some or all of the processors 151 to 15n may invoke and execute the instructions in the memory, to implement a corresponding function.

The display apparatus 130 in a cockpit is mainly classified as a vehicle display and a projection display, for example, a head-up display (head-up display, HUD). The vehicle display is a physical display and is an important part of an in-vehicle infotainment system. A plurality of displays may be disposed in the cockpit, for example, a digital instrument display, a central display screen, a display in front of a passenger in a front passenger seat (also referred to as a front passenger), a display in front of a left rear passenger, a display in front of a right rear passenger, and even a window that can be used as a display for display. The head-up display is also known as a head-up display system. The head-up display is mainly used to display driving information such as a speed and navigation on a display device (for example, a windshield) in front of a driver, to reduce the driver's line of sight transfer time, avoid a pupil change caused by the driver's line of sight transfer, and improve driving safety and comfort. The HUD includes, for example, a combiner head-up display (combiner-HUD, C-HUD) system, a windshield head-up display (windshield-HUD, W-HUD) system, and an augmented reality head-up display (augmented reality HUD, AR-HUD) system. It should be understood that another type of HUD system may also emerge with evolution of technologies. This is not limited in this application.

FIG. 2 is a diagram of an example of display distribution in a cockpit of a vehicle according to an embodiment of this application. As shown in FIG. 2, the cockpit of the vehicle may include an instrument display screen 201, a display 202 (or may also be referred to as a central display screen), a display 203 (or may also be referred to as an entertainment screen for a front passenger), a display 204 (or may also be referred to as an entertainment screen for a second-row left passenger), and a display 205 (or may also be referred to as an entertainment screen for a second-row right passenger).

It should be understood that graphical user interfaces (graphical user interface, GUI) in the following embodiments are described by using the five-seat vehicle shown in FIG. 2 as an example. Embodiments of this application are not limited thereto. For example, for a seven-seat sport utility vehicle (sport utility vehicle, SUV), a cockpit may include a central display screen, an entertainment screen for a front passenger, an entertainment screen for a second-row left passenger, an entertainment screen for a second-row right passenger, an entertainment screen for a third-row left passenger, and an entertainment screen for a third-row right passenger. For another example, for a passenger car, a cockpit may include a front entertainment screen and a rear entertainment screen, or a cockpit may include a display for a driving area and an entertainment screen for a passenger area. In an implementation, the entertainment screen for the passenger area may alternatively be disposed on the top of the cockpit.

Before the technical solutions in embodiments of this application are described, an auto lane change state is first described.

Auto lane change state 1: The state indicates a full-auto lane change manner of an ego vehicle. In this state, a vehicle only gives a driver a prompt that an auto lane change is about to be performed, and the driver serves as only a supervisor of the vehicle to supervise an auto lane change task, without a need to participate in an operation and decision-making. For example, a pop-up window and a sound effect are provided for a period of time before full-auto lane change, to give the driver the prompt that the auto lane change is about to be performed, so that the driver is prepared for a lane change.

Auto lane change state 2: The state indicates that a vehicle plans an auto lane change task, but can execute the auto lane change task only after the vehicle requests a driver to confirm the auto lane change task. The vehicle automatically changes a lane when the vehicle detects a preset action (for example, shifting a lever, gently turning a steering wheel, or manually tapping an operation button) of the driver. In this case, the driver is a person who confirms a lane change.

Auto lane change state 3: The state indicates that a vehicle does not plan an auto lane change, but a driver wants to actively change a lane at the moment. In this case, the driver can issue a lane change command to the vehicle based on a preset action (for example, shifting a lever, gently turning a steering wheel, or manually tapping an operation button). After receiving the command, the vehicle begins to plan and execute an auto lane change task. In this case, the driver is a person who issues the lane change command.

That the vehicle is in the auto lane change state may include that the vehicle detects that a user enables an NCA function or an ICA function.

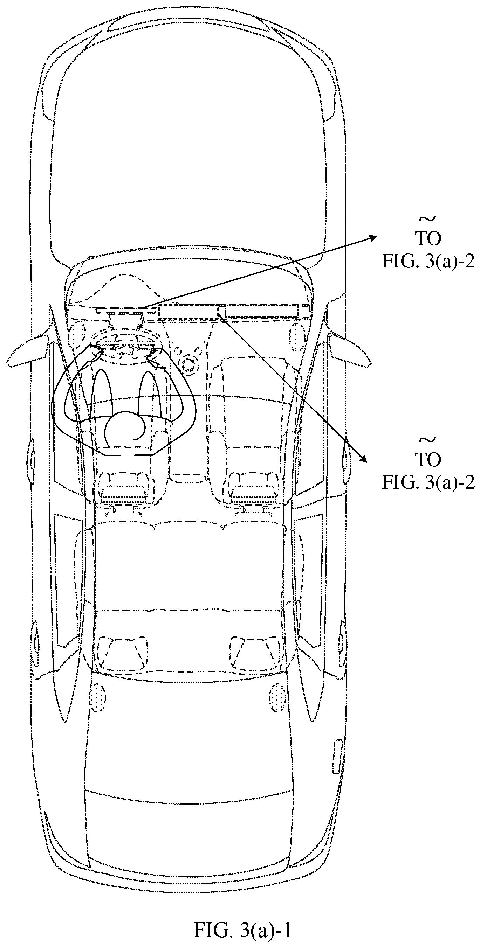

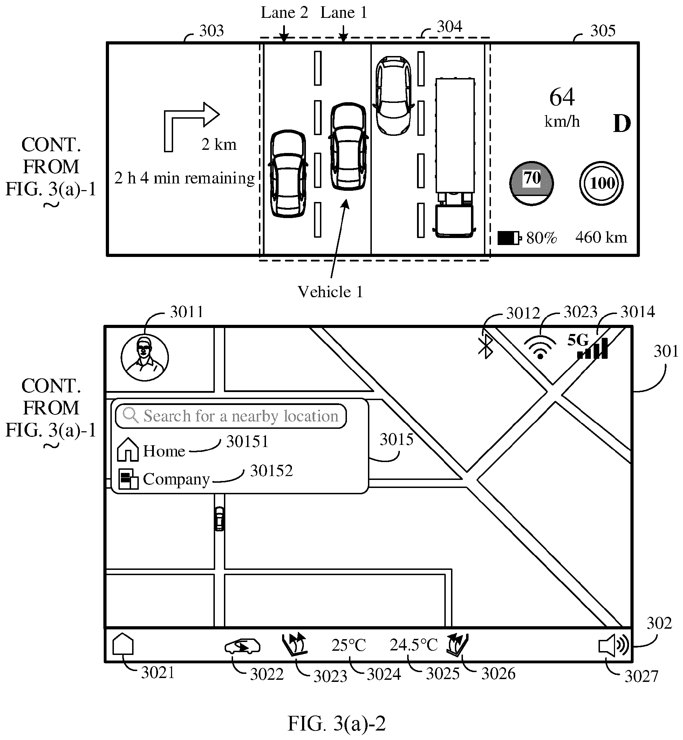

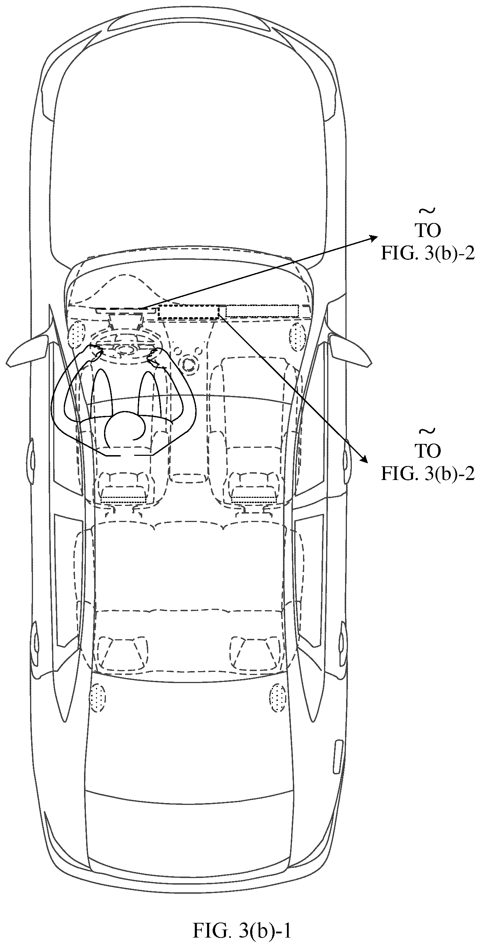

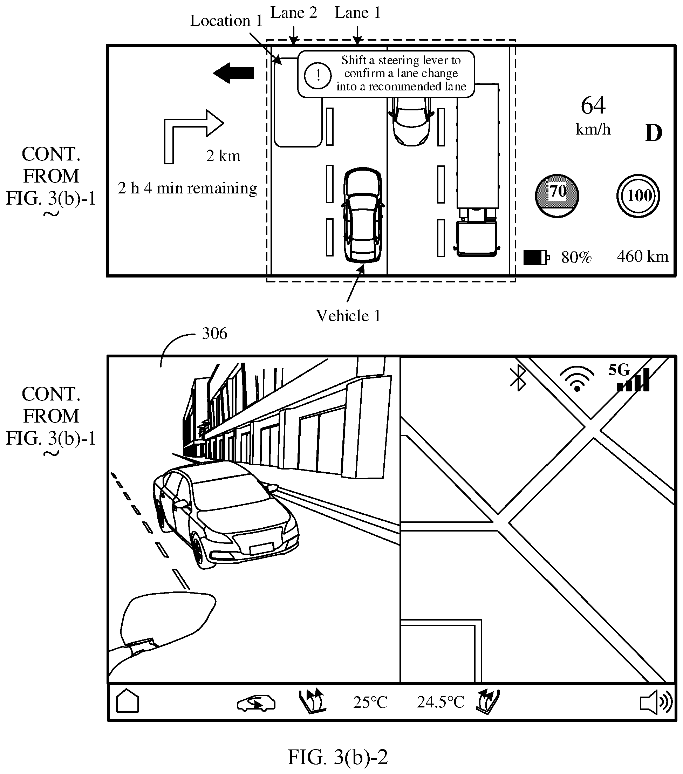

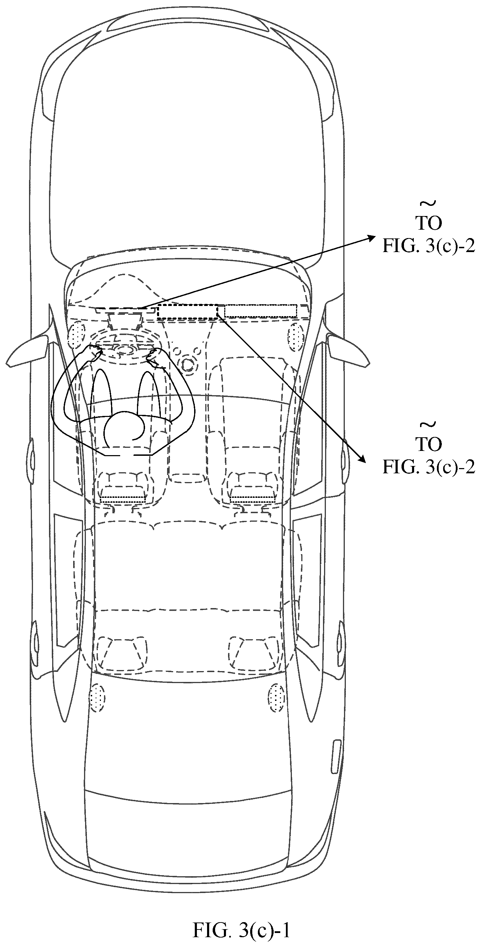

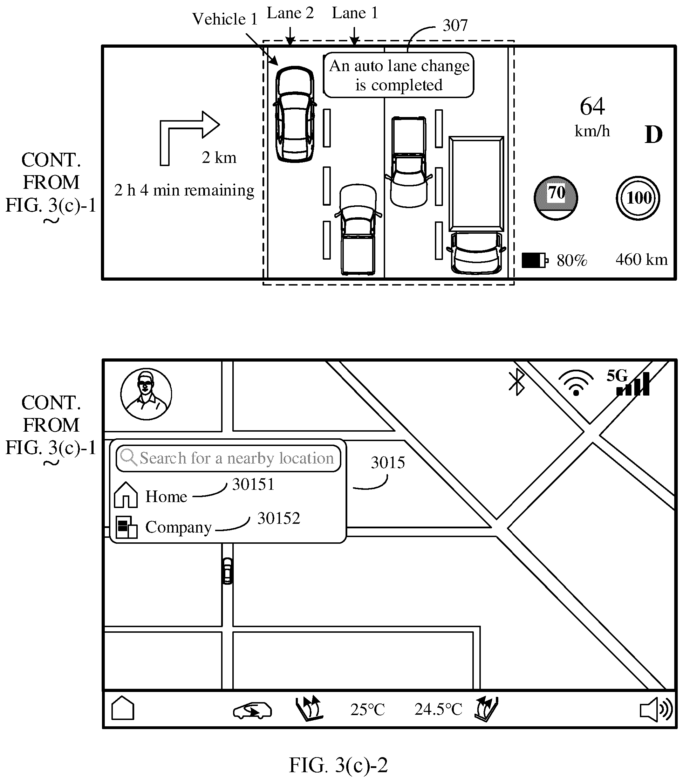

With reference to several groups of graphical user interfaces (graphical user interface, GUI) shown in FIG. 3(a)-1 to FIG. 6(b)-2, the following describes a display change of a vehicle display in an auto lane change process of a vehicle provided in embodiments of this application.

For example, FIG. 3(a)-1 to FIG. 3(c)-2 show a group of GUIs according to an embodiment of this application.

As shown in FIG. 3(a)-1 and FIG. 3(a)-2, a vehicle 1 is currently in an auto lane change state and is located in a lane 1. A display 202 of the vehicle includes a content display area 301 and a function bar 302. A navigation interface of an in-vehicle map application is currently displayed in the content display area 301. The navigation interface includes avatar information 3011 of a user account that logs in to the vehicle, a Bluetooth function icon 3012, a Wi-Fi function icon 3013, a cellular network signal icon 3014, and an in-vehicle map application search box 3015. The in-vehicle map application search box 3015 may include a home control 30151 and a company control 30152 that are set by a user. The function bar 302 includes an icon 3021 for switching to a display desktop, an in-vehicle circulation icon 3022, a driver seat heating function icon 3023, a driver area air conditioner temperature display icon 3024, a front passenger area air conditioner temperature display icon 3025, a front passenger seat heating function icon 3026, and a volume setting icon 3027.

An instrument display screen 201 of the vehicle includes a display area 303, a display area 304, and a display area 305. Navigation information (for example, a prompt indicating the user to turn right 2 km ahead and estimated driving duration) of the vehicle may be displayed in the display area 303. A virtual scene generated based on data collected by a sensor may be displayed in the display area 304. The virtual scene includes an ego vehicle (for example, the vehicle 1) and information (for example, information about another vehicle or information about a lane line) about an ambient environment of the ego vehicle. The virtual scene can assist a driver in performing an auto lane change. A current speed of the vehicle (for example, 64 km/h), gear information (for example, the vehicle 1 is currently in a D gear), a road speed limit value (for example, 100 km/h), a minimum driving speed on a road (for example, 70 km/h), remaining power (for example, 80%), and mileage (for example, 460 km) may be displayed in the display area 305.

The display area 304 shown in FIG. 3(a)-2 is described by using a two-dimensional (two-dimensional, 2D) virtual scene as an example. Embodiments of this application are not limited thereto. A three-dimensional (three dimensional, 3D) virtual scene may alternatively be displayed in the display area 304.

As shown in FIG. 3(b)-1 and FIG. 3(b)-2, when the vehicle 1 plans an auto lane change task (for example, changing from the lane 1 to a location 1 in a lane 2) and the driver needs to confirm the auto lane change task, prompt information "Shift a steering lever to confirm a lane change into a recommended lane" may be displayed in the display area 304. In addition, when a lever shift operation is detected, an image 306 may also be displayed on the display 202. The image 306 is a blind spot image that is of the lane 2 and that is collected by a camera apparatus outside a cockpit of the vehicle.

In this way, after viewing the image 306 displayed on the display 202, the driver can determine whether there is a risk in a process of changing the vehicle 1 from the lane 1 to the lane 2. When determining, based on the image 306, that the vehicle 1 changes from the lane 1 to the lane 2 without a safety risk, or the vehicle 1 currently needs to perform an auto lane change, the driver may perform a lever shift operation to indicate the vehicle 1 to execute the auto lane change task. When detecting the lever shift operation of the user, the vehicle 1 may determine that the user has confirmed the auto lane change task, so that the auto lane change task may be executed.

In an embodiment, if a target lane (for example, the lane 2) is safe, prompt information (for example, a text prompt and/or a color change) may be further displayed in the image 306, and the prompt information may indicate a traffic safety status of the target lane. For example, when the target lane is safe, prompt information "A target lane is safe" may be displayed in an area of the image 306, and/or an area of the image 306 may be displayed in green.

That the target lane is safe may include that the vehicle 1 and any vehicle located in the lane 2 and behind a side of the vehicle 1 fall within a preset functional safety range. The preset functional safety range includes determining of distance information between the vehicle 1 and any vehicle in the lane 2, determining of a relative speed, and the like.

As shown in FIG. 3(c)-1 and FIG. 3(c)-2, when the vehicle 1 completes the auto lane change, prompt information 307 "An auto lane change is completed" may be displayed on the instrument display screen 201 of the vehicle, and the vehicle 1 may further control the display 202 to hide the image 306.

In embodiments of this application, when planning the auto lane change task, the vehicle may display the virtual scene on the instrument display screen, and display a blind spot image of the target lane (for example, the lane 2) on the central display screen. The blind spot image compensates for disadvantages of a small observation range and a short observation distance for a blind spot behind a side of the vehicle in the virtual scene, and also compensates for a disadvantage of inaccurate detection or unstable display of the virtual scene. This helps improve safety of the vehicle in an auto lane change process, avoids back-and-forth switching of a line of sight of the driver between the vehicle display and a rearview mirror, avoids anxiety generated when the driver confirms an execution status of the auto lane change task and the blind spot image of the target lane, and helps improve driving experience of the user.

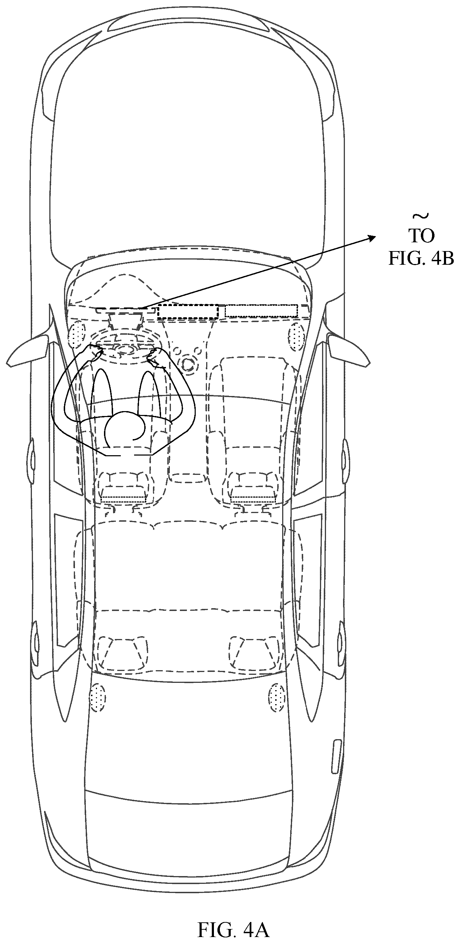

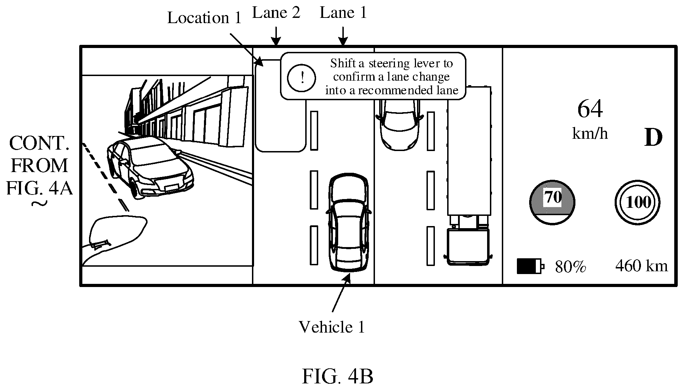

For example, FIG. 4A and FIG. 4B show another group of GUIs according to an embodiment of this application. The image 306 may be displayed in the display area 303, different from an area in FIG. 3(b)-1 and FIG. 3(b)-2, on the instrument display screen 201. When the vehicle 1 plans an auto lane change task (for example, changing from the lane 1 to the location 1 in the lane 2) and the driver needs to confirm the auto lane change task, the vehicle 1 may display prompt information "Shift a steering lever to confirm a lane change into a recommended lane" in the display area 304, and display the image 306 in the display area 303 on the instrument display screen 201. In this way, the driver can determine, based on the image 306 displayed on the instrument display screen 201, whether there is a risk in a process of changing the vehicle 1 from the lane 1 to the lane 2.

In an embodiment, if the target lane is safe, the prompt information may be further displayed in the image 306. For example, when the target lane is safe, prompt information "A target lane is safe" may be displayed in an area of the image 306, and/or an area of the image 306 may be displayed in green.

In embodiments of this application, when planning the auto lane change task, the vehicle may display a virtual scene and a blind spot image of the target lane (for example, the lane 2) on the instrument display screen. In this way, in the auto lane change process, the driver can view the virtual scene and the blind spot image of the target lane on the instrument display screen. This further avoids anxiety generated when the driver confirms an execution status of the auto lane change task and the blind spot image of the target lane, and helps improve driving experience of the user.

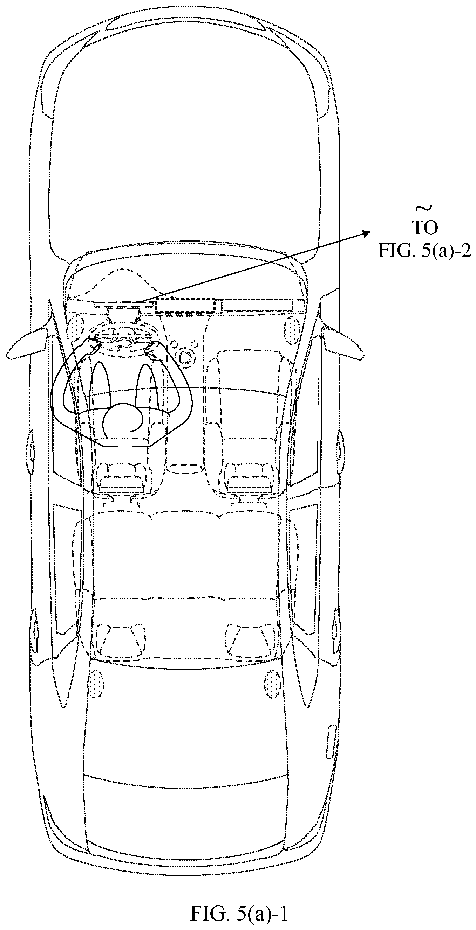

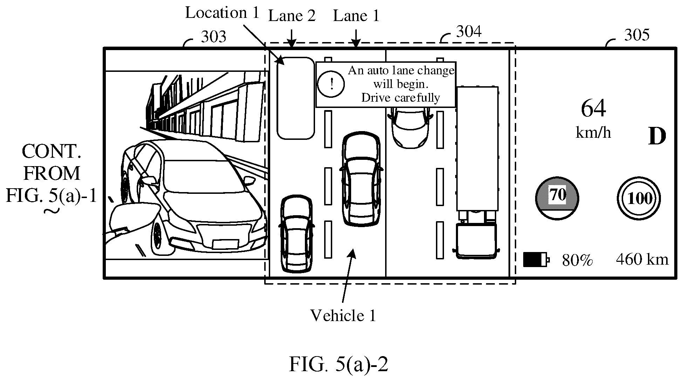

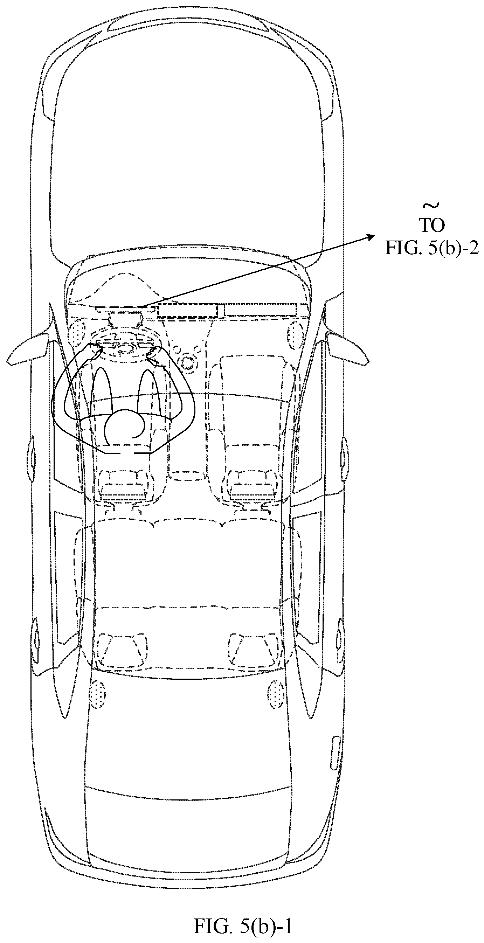

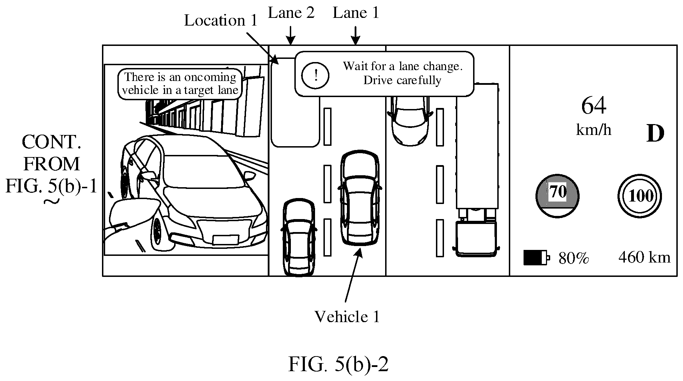

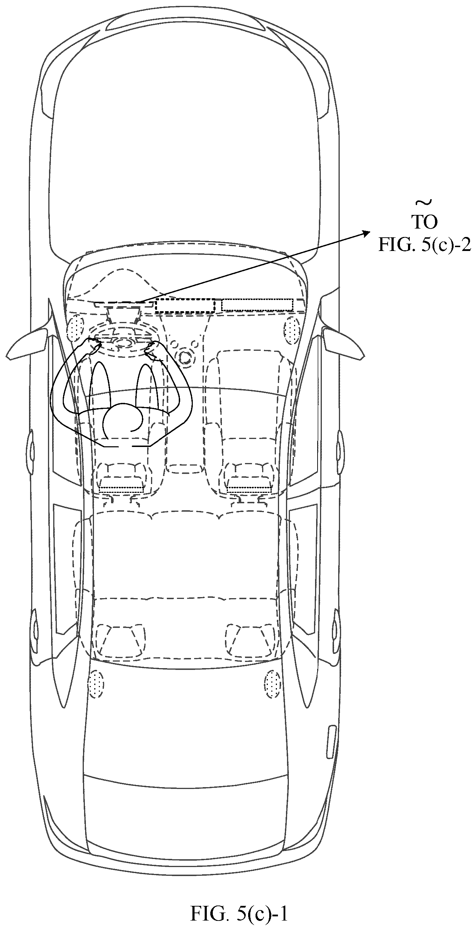

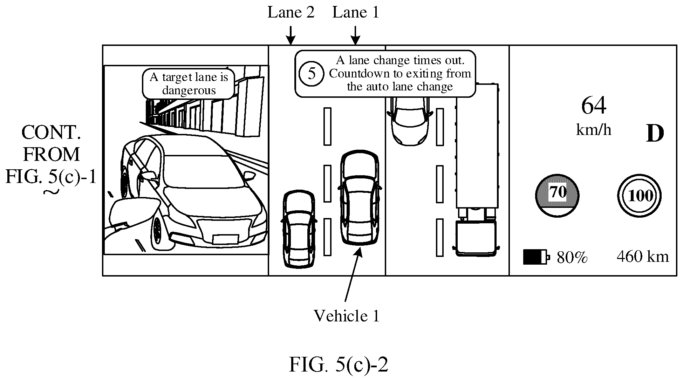

With reference to the GUIs in FIG. 3(a)-1 to FIG. 4B, the foregoing describes a display process, of the vehicle display, corresponding to a case in which the vehicle plans the auto lane change task and the driver needs to confirm the auto lane change task. FIG. 5(a)-1 to FIG. 5(c)-2 show another group of GUIs according to an embodiment of this application. This set of GUIs provide a display process, of the vehicle display, corresponding to a case in which the vehicle plans an auto lane change task and the driver does not need to confirm the auto lane change task.

As shown in FIG. 5(a)-1 and FIG. 5(a)-2, when the vehicle 1 plans an auto lane change task (for example, changing from the lane 1 to the location 1 in the lane 2) and the driver does not need to confirm the lane change task, prompt information "An auto lane change will begin. Drive carefully" may be displayed in the display area 304. In this case, the vehicle 1 may further display a blind spot image of the lane 2 in the display area 303. In this way, the driver can determine, based on the blind spot image displayed on the instrument display screen 201, whether there is a risk in a process of changing the vehicle 1 from the lane 1 to the lane 2.

As shown in FIG. 5(b)-1 and FIG. 5(b)-2, when the vehicle 1 determines that there is an oncoming vehicle in the lane 2, the vehicle 1 may prompt, based on the blind spot image and a text, the driver to supervise vehicle safety in the auto lane change process. If a target lane has a safety risk in the auto lane change process, the vehicle 1 may wait for an opportunity to perform a lane change, and may also prompt the driver with a traffic safety status of the target lane and an execution status of the auto lane change task. For example, the vehicle 1 may display prompt information "There is an oncoming vehicle in a target lane" in the image 306, and display prompt information "Wait for a lane change. Drive carefully" in the display area 304.

For example, that the vehicle 1 determines that there is an incoming vehicle in the lane 2 includes: The vehicle 1 determines that a distance between the vehicle 1 and a vehicle located in the lane 2 and behind a side of the vehicle 1 is less than a preset distance.

As shown in FIG. 5(c)-1 and FIG. 5(c)-2, when lane change waiting of the vehicle 1 times out, the vehicle 1 may exit from the auto lane change task.

In an embodiment, if lane change waiting times out, the prompt information may be displayed in the blind spot image of the lane 2. For example, prompt information "A target lane is dangerous" may be displayed in an area of the blind spot image of the lane 2, and/or an area of the image 306 may be displayed in red. Prompt information "A lane change times out. Countdown to exiting from the auto lane change" may be displayed in a prompt box in the display area 304, and/or the prompt box may be displayed in red.

For example, the vehicle 1 may display the prompt information "A target lane is dangerous" in the blind spot image of the lane 2 and display the prompt information "Alane change times out. Countdown to exiting from the auto lane change" in the display area 304.

In an embodiment, at the end of a countdown (for example, a 5-second countdown) displayed in the display area 304, the vehicle 1 may exit from the auto lane change task and hide the image 306 displayed in the display area 303.

In embodiments of this application, when the vehicle plans the auto lane change task and the driver does not need to confirm the auto lane change task, the vehicle may display a virtual scene and a blind spot image of the target lane (for example, the lane 2) on the instrument display screen. In this way, in the auto lane change process, the driver can monitor the execution status of the auto lane change task and the blind spot image of the target lane on the instrument display screen. The blind spot image compensates for disadvantages of a small observation range and a short observation distance for a blind spot behind a side of the vehicle in the virtual scene, and also compensates for a disadvantage of inaccurate detection or unstable display of the virtual scene. This helps improve safety of the vehicle in the auto lane change process, avoids back-and-forth switching of a line of sight of the driver between the vehicle display and a rearview mirror in a process in which the driver monitors the auto lane change of the vehicle, avoids anxiety generated when the driver confirms the execution status of the auto lane change task and the blind spot image of the target lane, and helps improve driving experience of the user.

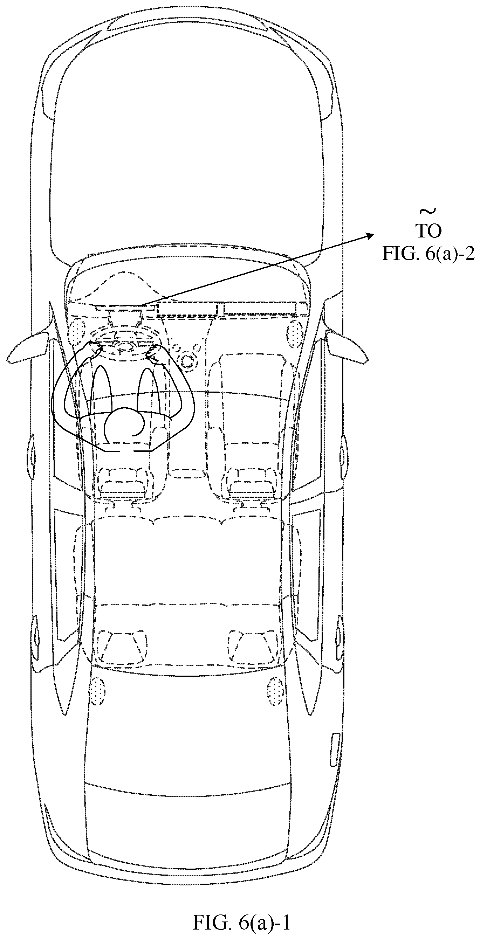

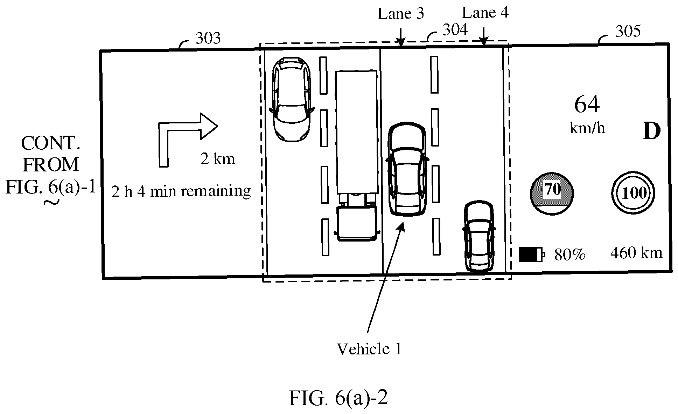

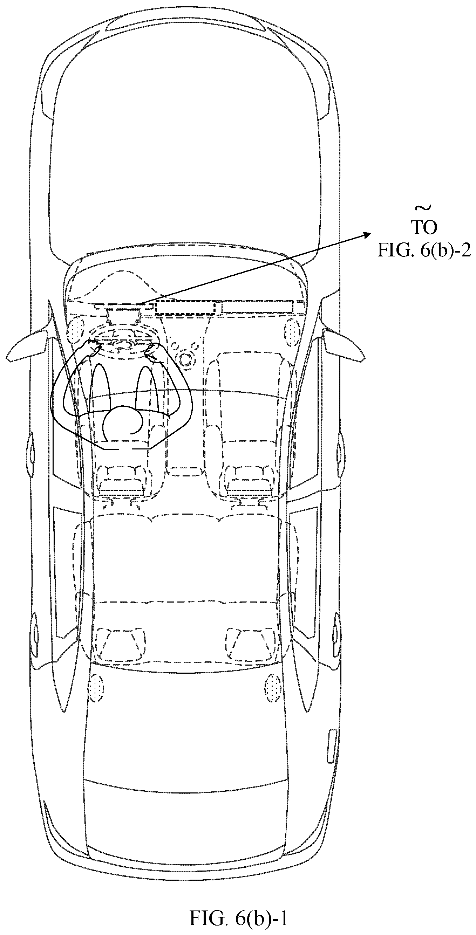

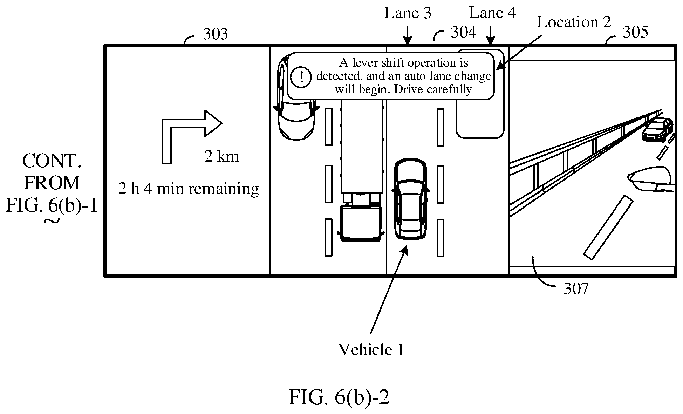

With reference to another group of GUIs shown in FIG. 6(a)-1 to FIG. 6(b)-2, the following describes a display process in which a vehicle is triggered to generate and execute an auto lane change task when a preset operation of a driver is detected.

As shown in FIG. 6(a)-1 and FIG. 6(a)-2, navigation information (for example, a prompt indicating the user to turn right 2 km ahead and estimated driving duration) of the vehicle may be displayed in the display area 303 on the instrument display screen 201. A virtual scene generated based on data collected by a sensor may be displayed in the display area 304. The virtual scene includes an ego vehicle (for example, the vehicle 1) and information about an ambient environment of the ego vehicle. A current speed of the vehicle (for example, 64 km/h), gear information (for example, the vehicle 1 is currently in a D gear), a road speed limit value (for example, 100 km/h), a minimum driving speed on a road (for example, 70 km/h), remaining power (for example, 80%), and mileage (for example, 460 km) may be displayed in the display area 305.

As shown in FIG. 6(b)-1 and FIG. 6(b)-2, when detecting a lever shift operation of the user, the vehicle 1 may determine that the driver expects the vehicle to execute an auto lane change task, so that the auto lane change task may be generated and executed. For example, the vehicle 1 may determine, according to a lever shift direction of the user, that the user wants to change from a lane 3 in which the user is currently located to a lane 4. The vehicle 1 may display prompt information "A lever shift operation is detected, and an auto lane change will begin. Drive carefully" in the display area 304, and display the image 307 in the display area 305 on the instrument display screen 201. The image 307 is a blind spot image that is of the lane 4 and that is collected by a camera apparatus outside a cockpit of the vehicle. In this way, the driver can determine, based on the image 307 displayed on the instrument display screen 201, whether there is a risk in a process of changing the vehicle 1 from the lane 3 to the lane 4.

In an embodiment, when detecting the lever shift operation of the user, the vehicle 1 may determine, based on an operational design domain (operational design domain, ODD), whether an ambient environment of a current vehicle meets an auto lane change condition. For example, when the vehicle detects a solid line between the lane 3 and the lane 4, it may be determined that the ambient environment of the current vehicle does not meet the auto lane change condition. In this case, the vehicle may display prompt information "An auto lane change fails, and a target lane is a solid line" in the display area 304, and display prompt information "There is a solid line between a current lane and a target lane" in the image 307.

In embodiments of this application, when the vehicle changes a lane to the left, the blind spot image may be displayed in the display area 303 on the left side of the instrument display screen; or when the vehicle changes a lane to the right, the blind spot image may be displayed in the display area 305 on the right side of the instrument display screen. In this way, a display location of the blind spot image is more in line with a habit of the driver. This helps improve driving experience of the user.

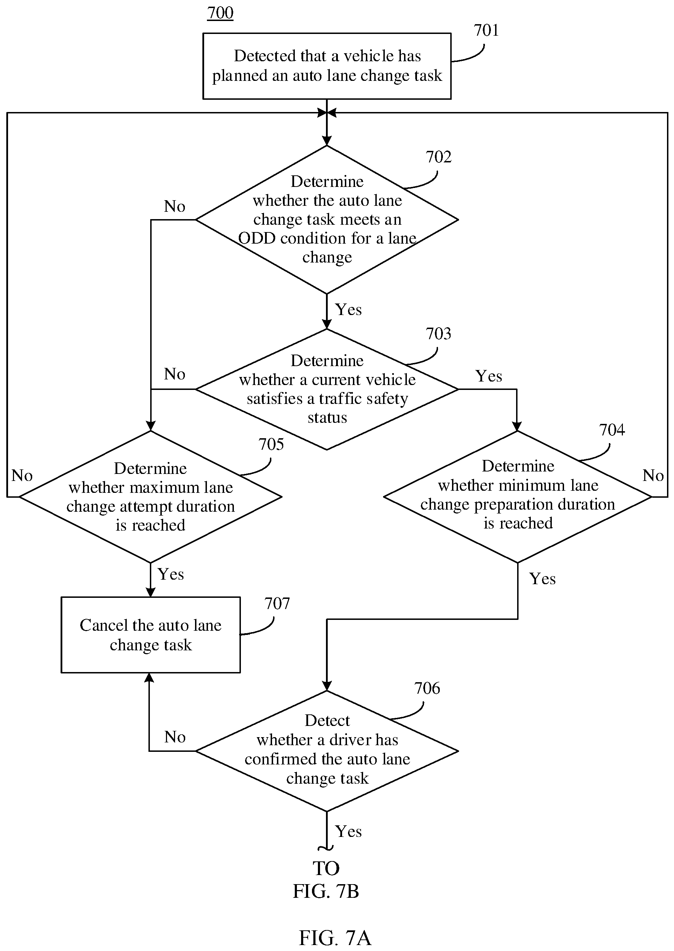

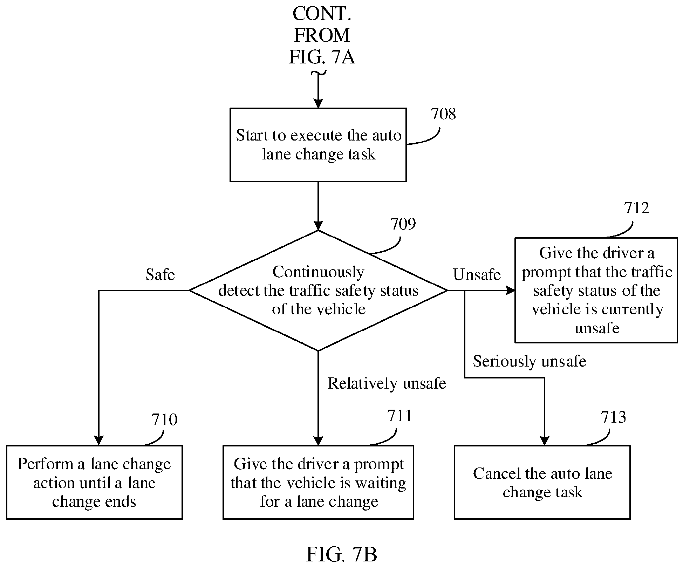

FIG. 7A and FIG. 7B are a flowchart of an auto lane change method 700 according to an embodiment of this application. As shown in FIG. 7A and FIG. 7B, the method 700 includes the following steps.

S701: Generate an auto lane change task.

For example, the auto lane change task may be generated when a vehicle is in an auto lane change state and an obstacle is detected in front of the vehicle in a lane in which the vehicle is currently located.

In an embodiment, before the auto lane change task is generated, the method further includes: determining that the vehicle is in the auto lane change state. For example, the vehicle detects that a user enables an NCA function or an ICA function.

In an embodiment, generating the auto lane change task includes: generating the auto lane change task when a preset operation of the user is detected.

Generating the auto lane change task may also be understood as generating an active lane change intention. For the user, an active lane change task can be executed in two ways: (1) After generating the active lane change task, the vehicle performs an auto lane change without confirmation from the user; and (2) After generating the active lane change task, the vehicle can execute the auto lane change task only after the user confirms the task.

In S701, the vehicle may actively plan the auto lane change task, or the vehicle may plan the auto lane change task when detecting the preset operation of the driver. For example, a trigger condition that the vehicle actively plans the lane change task includes but is not limited to one or more of the following: (1) The vehicle needs to change a lane based on a planned navigation path; (2) If there is another vehicle in a current lane, the vehicle determines that a lane change for overtaking can be performed; and (3) If there is an obstacle in the current lane, the vehicle determines that the vehicle can change the lane and travel in a changed lane.

S702: Determine whether the auto lane change task meets an ODD condition for a lane change.

In an embodiment, the ODD condition includes but is not limited to one or more of the following: a dotted line exists between the current lane and a target lane, the target lane is a non-bus lane, the driver is not in a hands-free state, and a minimum speed and a maximum speed for an auto lane change is met.

In an embodiment, if the auto lane change task meets the ODD condition for the lane change, S703 may be performed. Otherwise, S705 is performed.

S703: Determine, based on a fact that the auto lane change task meets the ODD condition for the lane change, whether a current vehicle satisfies a traffic safety status.

In an embodiment, whether the current vehicle satisfies the traffic safety status may be determined based on a driving parameter (for example, a traffic flow status of another vehicle around the vehicle) of another object around the vehicle. For example, the auto lane change task is that the vehicle changes from a lane 1 to a lane 2, and the vehicle detects that another vehicle that is in the lane 2 and that is close to the current vehicle in parallel is about to merge into the lane 1. In this case, the vehicle may determine that the current vehicle does not satisfy the traffic safety status.

In an embodiment, if the current vehicle satisfies the traffic safety status, S704 is performed. Otherwise, S705 is performed.

S704: When the current vehicle satisfies the traffic safety status, determine whether duration from a moment at which the vehicle plans the auto lane change task to a current moment reaches minimum lane change preparation duration.

In an embodiment, if the minimum preparation duration is reached, S706 is performed. Otherwise, step S702 is performed.

For example, the minimum lane change preparation duration may be 2 seconds.

S705: Determine whether duration from a moment at which the vehicle plans the auto lane change task to a current moment reaches maximum lane change attempt duration.

In an embodiment, if the maximum lane change attempt duration is reached, S707 is performed. Otherwise, step S702 is performed.

For example, the maximum lane change attempt duration is 5 seconds.

S706: When the minimum lane change preparation duration is reached, detect whether the driver has confirmed the auto lane change task.

In an embodiment, when the duration from the moment at which the vehicle plans the auto lane change task to the current moment reaches the minimum lane change preparation duration, the driver may be prompted to confirm the auto lane change task. For example, prompt information may be displayed on an instrument display screen, to prompt the driver to confirm the auto lane change task. When a lever shift operation of the driver is detected, it may be determined that the driver confirms the auto lane change task.

For another example, prompt information may be displayed on an instrument display screen and voice prompt information for prompting the driver to confirm the auto lane change task may be sent by a speaker, so as to prompt the driver to confirm the auto lane change task. When a lever shift operation of the driver or a voice command (for example, "Confirm a lane change") issued by the driver is detected, it may be determined that the driver confirms the auto lane change task.

In an embodiment, when the vehicle prompts the user to confirm the auto lane change task, the vehicle may display a blind spot image of the target lane on a vehicle display.

In an embodiment, the vehicle display may be an instrument display screen or a central display screen.

In an embodiment, the vehicle display is an instrument display screen. Displaying the blind spot image of the target lane on the vehicle display includes: displaying the blind spot image on the instrument display screen based on a location relationship between the target lane and the current lane.

S706 is described by using an example in which the vehicle plans the auto lane change task and the auto lane change task can be executed only after confirmation by the driver. For a scenario in which the vehicle plans the auto lane change task and the driver does not need to confirm the auto lane change task, the auto lane change task may be directly executed when the minimum lane change preparation duration is reached.

S707: Cancel the auto lane change task.

In an embodiment, the auto lane change task may be canceled if an operation of confirming the auto lane change task by the driver is not detected within preset duration in which the driver is prompted to confirm the auto lane change task. Alternatively, the auto lane change task may be canceled when an operation of rejecting the auto lane change task by the driver is detected (for example, a voice command "Reject an auto lane change" issued by the user is detected).

S708: When an operation of confirming the auto lane change task by the user is detected, start to execute the auto lane change task.

For example, the operation of confirming the auto lane change task includes but is not limited to shifting a lever, gently rotating a steering wheel, and manually tapping an operation button.

S709: Continuously detect the traffic safety status of the vehicle in a process of executing the auto lane change task.

For example, the traffic safety status may be classified into four levels: safe, relatively unsafe, unsafe, and seriously unsafe.

For example, in the process of executing the auto lane change task, if a distance between the vehicle and another vehicle located in the target lane and behind a side of the vehicle is greater than or equal to a preset threshold, and the another vehicle does not perform rapid acceleration, it may be considered that the traffic safety status of the vehicle is safe.

For another example, in the process of executing the auto lane change task, a distance between the vehicle and another vehicle located in the target lane and behind a side of the vehicle is greater than or equal to a preset threshold, and the another vehicle performs rapid acceleration. When the vehicle may yield to the another vehicle by reducing a speed or waiting in the current lane, and may complete a lane change after the yield, the traffic status of the vehicle may be considered as relatively unsafe.

For another example, in the process of executing the auto lane change task, if duration in which a distance between the vehicle and another vehicle located in the target lane and behind a side of the vehicle is less than a preset threshold is greater than or equal to preset duration, it may be considered that the traffic status of the vehicle is unsafe.

For another example, the vehicle changes to a target lane on the left side of the current lane. When the left front wheel and the left rear wheel have crossed a dotted line on a road and the right front wheel and the right rear wheel have not crossed a dotted line on a road, if it is detected that another vehicle located in the target lane and behind a side of the vehicle accelerates suddenly and a distance between the another vehicle and the vehicle is less than or equal to a preset value, it may be considered that the traffic status of the vehicle is seriously unsafe.

S710: In the process of executing the auto lane change task, if it is detected that the traffic safety status of the vehicle is safe, perform a lane change action until a lane change ends.

S711: In the process of executing the auto lane change task, if it is detected that the traffic safety status of the vehicle is relatively unsafe, give the driver a prompt that the vehicle is waiting for a lane change.

In an embodiment, in the process of executing the auto lane change task, if it is detected that the traffic safety status of the vehicle is relatively unsafe, the auto lane change may be further completed by reducing a vehicle speed.

S712: In the process of executing the auto lane change task, if it is detected that the traffic safety status of the vehicle is unsafe, give the driver a prompt that the traffic safety status of the vehicle is currently unsafe.

For example, as shown in FIG. 5(b)-1 and FIG. 5(b)-2, in a lane change process, the vehicle 1 finds that a distance between another vehicle in the lane 2 and the vehicle 1 is greater than or equal to the preset threshold, but the another vehicle is in an acceleration state. In this case, prompt information "Wait for a lane change. Drive carefully" may be displayed in the display area 304. When the another vehicle travels to the left front of the vehicle 1 and the distance between the another vehicle and the vehicle 1 is greater than or equal to the preset threshold, the vehicle 1 may continue to execute the auto lane change task.

S713: In the process of executing the auto lane change task, if it is detected that the traffic safety status of the vehicle is seriously unsafe, cancel the auto lane change task.

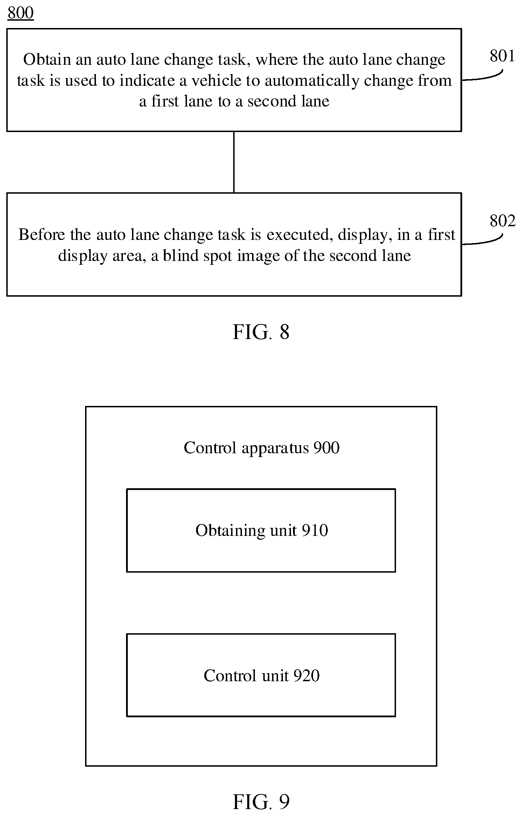

FIG. 8 is a flowchart of a display method 800 according to an embodiment of this application. The method 800 may be performed by a vehicle, or the method 800 may be performed by the foregoing computing platform, or the method 800 may be performed by a display system that includes a computing platform and a display apparatus (for example, a vehicle display), or the method 800 may be performed by a system-on-a-chip (system-on-a-chip, SOC) of the foregoing computing platform, or the method 800 may be performed by a processor of the computing platform. As shown in FIG. 8, the method 800 includes the following steps.

S801: Obtain an auto lane change task, where the auto lane change task is used to indicate a vehicle to automatically change from a first lane to a second lane.

Optionally, obtaining the auto lane change task includes: when the vehicle is in an auto lane change state, generating the auto lane change task and prompting a user to confirm the auto lane change task.

Optionally, that the vehicle is in the auto lane change state includes that the vehicle detects that the user starts an auto lane change function. For example, the auto lane change function includes but is not limited to an NCA function or an ICA function.

Optionally, obtaining the auto lane change task includes: generating the auto lane change task when the vehicle is not in an auto lane change state and a preset operation of a user is detected.

When the vehicle is not in the auto lane change state, it may be determined, by detecting the preset operation of the user, that the user expects the vehicle to perform an auto lane change, so as to generate the auto lane change task.

Optionally, obtaining the auto lane change task includes: obtaining the auto lane change task sent by a server.

For example, the vehicle may send information about an ambient environment detected by a sensor to the server. The server may determine, based on the information about the ambient environment, whether the vehicle meets an auto lane change condition. If the auto lane change condition is met, the server may send the auto lane change task to the vehicle.

S802: Before the auto lane change task is executed, display, in a first display area, a blind spot image of the second lane, where the blind spot image of the second lane is obtained by a camera apparatus outside a cockpit of the vehicle.

Optionally, obtaining the auto lane change task includes: when the vehicle is in an auto lane change state, generating the auto lane change task and prompting a user to confirm the auto lane change task. Displaying, in the first display area, the blind spot image of the second lane includes: displaying, in the first display area, the blind spot image of the second lane when an operation of confirming the auto lane change task by the user is detected.

For example, as shown in FIG. 3(b)-1 and FIG. 3(b)-2, a vehicle 1 is in the auto lane change state, and a driver needs to confirm the auto lane change task. The vehicle 1 may generate the auto lane change task and may display prompt information "Shift a steering lever to confirm a lane change into a recommended lane". When an operation of shifting a steering lever by the user is detected, a blind spot image of a lane 2 may be displayed on a display 202.

Optionally, obtaining the auto lane change task includes: generating the auto lane change task when the vehicle is not in an auto lane change state and a preset operation of a user is detected; and displaying, in the first display area, the blind spot image of the second lane includes: displaying, in the first display area, the blind spot image of the second lane when the preset operation is detected.

For example, as shown in FIG. 6(b)-1 and FIG. 6(b)-2, when detecting a lever shift operation of the user, the vehicle 1 may generate the auto lane change task and display, on an instrument display screen 201, prompt information "A lever shift operation is detected, and an auto lane change will begin. Drive carefully". In addition, when the lever shift operation is detected, a blind spot image of a lane 4 may be displayed in a display area 305 on the instrument display screen 201.

Optionally, obtaining the auto lane change task includes: generating the auto lane change task when the vehicle is in an auto lane change state; and displaying, in the first display area, the blind spot image of the second lane includes: displaying, in the first display area, the blind spot image of the second lane when the auto lane change task is generated.

For example, as shown in FIG. 5(a)-1 and FIG. 5(a)-2, the vehicle 1 is in the auto lane change state and the driver does not need to confirm the auto lane change task. When the vehicle 1 generates the auto lane change task, the vehicle 1 may display prompt information "An auto lane change will begin. Drive carefully", and display the blind spot image of the lane 2 in a display area 303 on the instrument display screen 201.

Optionally, before the blind spot image of the second lane is displayed in the first display area, the method further includes: determining the first display area based on a relative location relationship between the first lane and the second lane.

For example, as shown in FIG. 5(b)-1 and FIG. 5(b)-2, when the vehicle changes a lane to the left, a blind spot image of a target lane (for example, the lane 2) may be displayed in a left area (for example, the area 303) of the instrument display screen 201. As shown in FIG. 6(b)-1 and FIG. 6(b)-2, when the vehicle changes a lane to the right, a blind spot image of a target lane (for example, the lane 4) may be displayed in a left area (for example, the area 305) of the instrument display screen 201.

Optionally, the vehicle includes an instrument display screen and a central display screen. The method further includes: displaying a virtual scene in a second display area, where the virtual scene includes the vehicle and information about an environment around the vehicle. The first display area and the second display area are display areas on the instrument display screen; or the first display area is a display area on the central display screen, and the second display area is a display area on the instrument display screen.

For example, the instrument display screen may be the instrument display screen 201 in FIG. 2, and the central display screen may be the display 202 in FIG. 2.

For example, as shown in FIG. 3(b)-1 and FIG. 3(b)-2, the vehicle may display the virtual scene in a display area 304 on the instrument display screen, and display the blind spot image of the lane 2 in a display area on the central display screen.

For example, as shown in FIG. 4A and FIG. 4B, the vehicle may display the virtual scene in the display area 304 on the instrument display screen, and display the blind spot image of the lane 2 in the display area 303 on the instrument display screen.

Optionally, the method further includes: displaying prompt information in the first display area in a process of executing the auto lane change task, where the prompt information indicates a traffic safety status of the second lane.

For example, as shown in FIG. 5(b)-1 and FIG. 5(b)-2, in addition to the blind spot image of the lane 2, the display area 303 may display prompt information "There is an oncoming vehicle in a target lane".

For example, as shown in FIG. 5(c)-1 and FIG. 5(c)-2, in addition to the blind spot image of the lane 2, the display area 303 may display prompt information "A target lane is dangerous".

The prompt information displayed in the first display area may be determined by the vehicle based on data collected by the sensor (for example, one or more of a surround-view camera, a lidar, a millimeter wave radar, and an ultrasonic radar). For example, when it is determined, based on data collected by the surround-view camera or the lidar, that a vehicle 2 in the lane 2 is located at a left rear of the vehicle 1, and it is determined, based on data collected by the lidar, that a distance between the vehicle 2 and the vehicle 1 is less than a preset safe distance (for example, 5 meters), the vehicle 1 may notify the user in the display area 303 that the lane 2 is dangerous.

Optionally, the method further includes: hiding the blind spot image when the auto lane change task is completed.

For example, as shown in FIG. 3(c)-1 and FIG. 3(c)-2, when the vehicle completes the auto lane change task, the vehicle may hide the blind spot image, of the lane 2, displayed on the display 202.

Embodiments of this application further provide an apparatus configured to implement any one of the foregoing methods. For example, embodiments of this application provide an apparatus including units (or means) configured to implement the steps performed by the vehicle or the display system in any one of the foregoing methods.

FIG. 9 is a block diagram of a control apparatus 900 according to an embodiment of this application. As shown in FIG. 9, the control apparatus 900 includes: an obtaining unit 910, configured to obtain an auto lane change task, where the auto lane change task is used to indicate a vehicle to automatically change from a first lane to a second lane; and a control unit 920, configured to: before the auto lane change task is executed, control a blind spot image of the second lane to be displayed in a first display area, where the blind spot image of the second lane is obtained by a camera apparatus outside a cockpit of the vehicle.

Optionally, the apparatus further includes a detection unit. The obtaining unit 910 is configured to: when the vehicle is in an auto lane change state, generate the auto lane change task and prompt a user to confirm the auto lane change task. The control unit 920 is configured to: when the detection unit detects an operation of confirming the auto lane change task by the user, control the blind spot image of the second lane to be displayed in the first display area.

Optionally, the apparatus further includes a detection unit. The obtaining unit 910 is configured to generate the auto lane change task when the vehicle is not in an auto lane change state and a preset operation of a user is detected. The control unit 920 is configured to: when the detection unit detects the preset operation, control the blind spot image of the second lane to be displayed in the first display area.

Optionally, the obtaining unit 910 is configured to generate the auto lane change task when the vehicle is in an auto lane change state. The control unit 920 is configured to: when the obtaining unit generates the auto lane change task, control the blind spot image of the second lane to be displayed in the first display area.

Optionally, the apparatus further includes a determining unit. The determining unit is configured to: before the control unit controls the blind spot image of the second lane to be displayed in the first display area, determine the first display area based on a relative location relationship between the first lane and the second lane.

Optionally, the vehicle includes an instrument display screen and a central display screen. The control unit 920 is further configured to control a virtual scene to be displayed in a second display area, where the virtual scene includes the vehicle and information about an environment around the vehicle. The first display area and the second display area are display areas on the instrument display screen; or the first display area is a display area on the central display screen, and the second display area is a display area on the instrument display screen.

Optionally, the control unit 920 is further configured to: in a process of executing the auto lane change task, control prompt information to be displayed in the first display area, where the prompt information indicates a traffic safety status of the second lane.

Optionally, the control unit 920 is further configured to hide the blind spot image when the auto lane change task is completed.

For example, the obtaining unit 910 may be the computing platform in FIG. 1, or a processing circuit, a processor, or a controller in the computing platform. For example, the obtaining unit 910 is the processor 151 in the computing platform. When the vehicle is in the auto lane change state, the processor 151 may generate an auto lane change task when determining that there is an obstacle in front of the vehicle in the lane in which the vehicle is currently located.

Alternatively, when the vehicle is in a non-auto lane change state, the processor 151 may generate an auto lane change task when determining that the user gives an auto lane change instruction.

For example, the control unit 920 may be the computing platform in FIG. 1, or a processing circuit, a processor, or a controller in the computing platform. For example, the control unit 920 is the processor 152 in the computing platform. The processor 152 may be configured to control display of a display apparatus. When the processor 151 generates the auto lane change task and the auto lane change task does not need to be confirmed by the user, the processor 152 may control the blind spot image of the second lane to be displayed in the first display area.

Alternatively, when the processor 151 generates the auto lane change task and the auto lane change task needs to be confirmed by the user, the processor 152 may control a prompt apparatus to prompt the user to confirm the auto lane change task. For example, the processor 152 may control a sound-making apparatus (for example, a speaker) to send voice information, so as to prompt the user to confirm the auto lane change task; or the processor 152 may control the display apparatus (for example, the instrument display screen 201 or the display 202) to display the prompt information, so as to prompt the user to confirm the auto lane change task.

The functions implemented by the obtaining unit 910 and the functions implemented by the control unit 920 may be separately implemented by different processors, or may be implemented by a same processor. This is not limited in embodiments of this application.

It should be understood that division into units in the foregoing apparatus is merely logical function division. During actual implementation, all or some of the units may be integrated into one physical entity or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of each unit of the apparatus. The processor is, for example, a general purpose processor like a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatus may be implemented in a form of software invoked by a processor, or all units may be implemented in a form of a hardware circuit, or some units may be implemented in a form of software invoked by a processor, and a remaining part may be implemented in a form of a hardware circuit.

In embodiments of this application, the processor is a circuit that has a signal processing capability. In an implementation, the processor may be a circuit that has instruction reading and running capabilities, for example, a CPU, a microprocessor, a GPU, or a DSP. In another implementation, the processor may implement a specific function based on a logical relationship of a hardware circuit, and the logical relationship of the hardware circuit is fixed or reconfigurable. For example, the processor is a hardware circuit implemented by using an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be independently implemented. In an implementation, these units are integrated and implemented in a form of an SOC. The SOC may include at least one processor, configured to implement any one of the foregoing methods or implement functions of units of the apparatus. The at least one processor may be of different types, for example, include a CPU and an FPGA, a CPU and an artificial intelligence processor, a CPU and a GPU, and the like.

An embodiment of this application further provides a display system. The display system includes a computing platform and a display apparatus. The computing platform may include the control apparatus 900.

For example, the display apparatus may include a vehicle display, for example, the display apparatus 130 in FIG. 1, or the instrument display screen 201 or the display 202 in FIG. 2.

An embodiment of this application further provides an apparatus. The apparatus includes a processing unit and a storage unit. The storage unit is configured to store instructions, and the processing unit executes the instructions stored in the storage unit, to enable the apparatus to perform the method or step performed in the foregoing embodiments.

Optionally, if the apparatus is located in a vehicle, the processing unit may be the processors 151 to 15n shown in FIG. 1.

An embodiment of this application further provides a mobile carrier. The mobile carrier may include the control apparatus 900, or include the display system.

Optionally, the mobile carrier may be a vehicle.

An embodiment of this application further provides a computer program product. The computer program product includes computer program code. When the computer program code is run on a computer, the computer is enabled to perform the method.

An embodiment of this application further provides a computer-readable medium. The computer-readable medium stores program code. When the computer program code is run on a computer, the computer is enabled to perform the method.

In an implementation process, steps in the foregoing methods can be implemented by using a hardware integrated logical circuit in the processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It should be understood that, in embodiments of this application, the memory may include a read-only memory and a random access memory, and provide instructions and data to the processor.

It should further be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented based on some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, comprising:
obtaining an auto lane change task, wherein the auto lane change task is used to indicate a vehicle to automatically change from a first lane to a second lane; and
before the auto lane change task is executed, displaying, in a first display area, a blind spot image of the second lane, wherein the blind spot image of the second lane is obtained by a camera apparatus outside a cockpit of the vehicle.

2. The method according to claim 1, wherein the obtaining an auto lane change task comprises:
when the vehicle is in an auto lane change state, generating the auto lane change task and prompting a user to confirm the auto lane change task; and
the displaying, in a first display area, a blind spot image of the second lane comprises:
displaying, in the first display area, the blind spot image of the second lane when an operation of confirming the auto lane change task by the user is detected.

3. The method according to claim 1, wherein the obtaining an auto lane change task comprises:
generating the auto lane change task when the vehicle is not in an auto lane change state and a preset operation of a user is detected; and
the displaying, in a first display area, a blind spot image of the second lane comprises:
displaying, in the first display area, the blind spot image of the second lane when the preset operation is detected.

4. The method according to claim 1, wherein the obtaining an auto lane change task comprises:
generating the auto lane change task when the vehicle is in an auto lane change state; and
the displaying, in a first display area, a blind spot image of the second lane comprises:
displaying, in the first display area, the blind spot image of the second lane when the auto lane change task is generated.

5. The method according to any one of claims 1 to 4, wherein before the displaying, in a first display area, a blind spot image of the second lane, the method further comprises:
determining the first display area based on a relative location relationship between the first lane and the second lane.

6. The method according to any one of claims 1 to 5, wherein the vehicle comprises an instrument display screen and a central display screen; and the method further comprises:
displaying a virtual scene in a second display area, wherein the virtual scene comprises the vehicle and information about an environment around the vehicle; and
the first display area and the second display area are display areas on the instrument display screen; or
the first display area is a display area on the central display screen, and the second display area is a display area on the instrument display screen.

7. The method according to any one of claims 1 to 6, wherein the method further comprises:
displaying prompt information in the first display area in a process of executing the auto lane change task, wherein the prompt information indicates a traffic safety status of the second lane.

8. The method according to any one of claims 1 to 7, wherein the method further comprises:
hiding the blind spot image when the auto lane change task is completed.

9. A control apparatus, comprising:
an obtaining unit, configured to obtain an auto lane change task, wherein the auto lane change task is used to indicate a vehicle to automatically change from a first lane to a second lane; and
a control unit, configured to: before the auto lane change task is executed, control a blind spot image of the second lane to be displayed in a first display area, wherein the blind spot image of the second lane is obtained by a camera apparatus outside a cockpit of the vehicle.

10. The apparatus according to claim 9, wherein the apparatus further comprises a detection unit, wherein
the obtaining unit is configured to: when the vehicle is in an auto lane change state, generate the auto lane change task and prompt a user to confirm the auto lane change task; and
the control unit is configured to: when the detection unit detects an operation of confirming the auto lane change task by the user, control the blind spot image of the second lane to be displayed in the first display area.

11. The apparatus according to claim 9, wherein the apparatus further comprises a detection unit, wherein
the obtaining unit is configured to generate the auto lane change task when the vehicle is not in an auto lane change state and a preset operation of a user is detected; and
the control unit is configured to: when the detection unit detects the preset operation, control the blind spot image of the second lane to be displayed in the first display area.

12. The apparatus according to claim 9, wherein
the obtaining unit is configured to generate the auto lane change task when the vehicle is in an auto lane change state; and
the control unit is configured to: when the obtaining unit generates the auto lane change task, control the blind spot image of the second lane to be displayed in the first display area.

13. The apparatus according to any one of claims 9 to 12, wherein the apparatus further comprises a determining unit; and
the determining unit is configured to determine the first display area based on a relative location relationship between the first lane and the second lane.

14. The apparatus according to any one of claims 9 to 13, wherein the vehicle comprises an instrument display screen and a central display screen; and
the control unit is further configured to control a virtual scene to be displayed in a second display area, wherein the virtual scene comprises the vehicle and information about an environment around the vehicle, wherein
the first display area and the second display area are display areas on the instrument display screen; or
the first display area is a display area on the central display screen, and the second display area is a display area on the instrument display screen.

15. The apparatus according to any one of claims 9 to 14, wherein
the control unit is further configured to: in a process of executing the auto lane change task, control prompt information to be displayed in the first display area, wherein the prompt information indicates a traffic safety status of the second lane.

16. The apparatus according to any one of claims 9 to 15, wherein
the control unit is further configured to hide the blind spot image when the auto lane change task is completed.

17. A control apparatus, wherein the apparatus comprises at least one processor and an interface circuit, and the processor communicates with a display apparatus through the interface circuit; and
the at least one processor is configured to perform the method according to any one of claims 1 to 8, to control a display interface of the display apparatus.

18. A display system, wherein the display system comprises a computing platform and a display apparatus, and the computing platform comprises the control apparatus according to any one of claims 9 to 17.

19. A vehicle, comprising the control apparatus according to any one of claims 9 to 17 or the display system according to claim 18.

20. A computer-readable storage medium, wherein the computer-readable storage medium stores a computer program, and when the computer program is executed by a computer, the method according to any one of claims 1 to 8 is implemented.

21. A chip, wherein the chip comprises a processor and a data interface, and the processor reads, through the data interface, instructions stored in a memory, to perform the method according to any one of claims 1 to 8.
